# EUROPÄISCHE PATENTSCHRIFT

(11) **EP 0 691 222 B1**
(45) Veröffentlichungstag und Bekanntmachung des Hinweises auf die Patenterteilung: **12.08.1998**
(21) Anmeldenummer: 95890107.6
(22) Anmeldetag: 09.06.1995
(51) Int. Cl.: B60C 11/12

(54) **Fahrzeugreifen**
Vehicle tyre
Bandage pour véhicule

(30) Priorität: 06.07.1994 AT 1334/94
(43) Veröffentlichungstag der Anmeldung: 10.01.1996
(73) Patentinhaber: Semperit Reifen Aktiengesellschaft, A-2514 Traiskirchen (AT)
(72) Erfinder: Angerer, Karl Dipl.-Ing., A-7212 Forchtenstein (AT)
(74) Vertreter: Vinazzer, Edith, Dipl.-Ing.

(56) Entgegenhaltungen:
- EP-A- 0 330 643
- EP-A- 0 547 041
- AT-B- 385 953
- CH-A- 566 877
- DE-C- 898 862
- GB-A- 867 556
- PATENT ABSTRACTS OF JAPAN vol. 015 no. 053 (M-1079) ,7.Februar 1991 & JP-A-02 286405 (YOKOHAMA RUBBER CO LTD:THE) 26.November 1990,

## Beschreibung

Die vorliegende Erfindung betrifft einen Fahrzeugreifen, insbesondere für den Einsatz unter winterlichen Fahrbedingungen, mit einem Laufstreifenprofil, welches Profilelemente, wie Profilblöcke oder in Reifenumfangsrichtung umlaufende Laufstreifenbänder oder dergleichen aufweist, die mit einer Vielzahl von Feineinschnitten versehen sind, die ein Netz aus n-Ecken bilden.

Fahrzeugluftreifen mit Laufstreifenprofilen, die mit einer Vielzahl von Feineinschnitten versehen sind, sind in unterschiedlichen Ausführungsformen bekannt und haben insbesondere ein gutes Traktions- und Bremsverhalten unter winterlichen Fahrbedingungen auf schneebedecktem oder eisbedecktem Untergrund. Ein derartiger Fahrzeugreifen ist beispielsweise aus der AT-B 390.915 bekannt. Dieser Fahrzeugreifen besitzt ein Laufstreifenprofil, welches eine entlang der Mittelumfangslinie umlaufende Profilrippe und seitlich dieser Rippe je zwei in Umfangsrichtung verlaufende Blockreihen aufweist. Sowohl die Mittelrippe als auch die Profilblöcke in den Blockreihen sind jeweils mit einer Anzahl von über die Blockbreite bzw. die Rippenbreite durchgehenden Feineinschnitten versehen. Diese Feineinschnitte verlaufen im wesentlichen parallel zueinander und sind auch im wesentlichen voneinander gleich beabstandet. Die Feineinschnitte sind ferner gegenüber der Axialrichtung geneigt und zwar derart, daß sie über einen Großteil ihrer Länge einen Winkel von ca. 30° mit der Axialrichtung einschließen. Reifen mit diesem Laufstreifenprofil und ähnlichen Laufstreifenprofilen haben im allgemeinen sehr gute Griffeigenschaften. Die eher ausgeprägte Ausrichtung der Feineinschnitte in Axialrichtung hat jedoch den Effekt, daß die Profilelemente in Umfangsrichtung eine relativ niedrige Biegesteifigkeit, in Querrichtung eine relativ hohe Biegesteifigkeit aufweisen, was für das Fahrverhalten auf Schnee oder Eis weniger günstig ist.

Ein Fahrzeugreifen gemäß dem Oberbegriff des Anspruches 1 ist in der AT-B 385 953 bekannt. Durch eine gitterartige Einlage, die im Bereich des Laufstreifens auf den Rohreifen gelegt und durch die die Rillen des Profils bildenden Vorsprünge der Vulkanisationsform in den Laufstreifen hineingedrückt werden, sollen Trennfugen entstehen, die keine Breite besitzen und Relativbewegungen der zwischen ihnen befindlichen Profilteile zulassen sollen, um die Griffeigenschaften des Reifens zu erhöhen. Je nach Ausführung der gitterartigen Einlage entsteht derart ein Netz von Trennfugen mit rechteckigen, quadratischen oder parallelogrammförmigen Elementen.

Die Erfindung hat sich die Aufgabe gestellt, über die Feineinschnittanordnung und Ausgestaltung eine Möglichkeit der Vergleichmäßigung und/oder der gezielten Beeinflussung der Biegesteifigkeit von Profilelementen im Laufstreifenprofil aufzufinden, wobei eine hohe Feineinschnittdichte zur Gewährleistung der unter winterlichen Fahrbedingungen erforderlichen Griffeigenschaften möglich sein soll.

Gelöst wird die gestellte Aufgabe erfindungsgemäß dadurch, daß das Netz aus Feineinschnitten entweder aus entlang von Fünf- oder Sechsecken angeordneten Feineinschnitten besteht oder durch zwei Scharen von einander unter von 90° abweichenden Winkeln schneidenden und gerade verlaufenden Feineinschnitten gebildet wird.

Durch die erfindungsgemäßen Möglichkeiten der Anordnung der Feineinschnitte kann einerseits eine hohe Feineinschnittdichte geschaffen werden und es kann andererseits die Biegesteifigkeit von Profilelementen derart beeinflußt werden, daß die Steifigkeit sowohl bei Beanspruchung in Umfangs- als auch in Querrichtung vergleichmäßigt wird. Zusätzlich besteht auch die Möglichkeit, gezielt die Biegesteifikgeit eines Profilelementes zu beeinflussen was, je nachdem ob dieses Profilelement im Laufstreifenmittelbereich oder eher in den Seitenbereichen des Laufstreifens angeordnet ist, von Vorteil sein kann.

Eine besonders gute Vergleichmäßigung der Biegesteifigkeit eines Profilelementes läßt sich dadurch erzielen, daß das Feineinschnittnetz aus regelmäßigen bzw. im wesentlichen regelmäßigen Sechsecken besteht.

Bei einer anderen Variante, die es gestattet, die Biegesteifigkeit gezielt zu beeinflussen ist vorgesehen, daß jede Schar von Feineinschnitten verschieden beabstandete und/oder zumindest zum Teil nicht parallel zueinander verlaufende Feineinschnitte enthält.

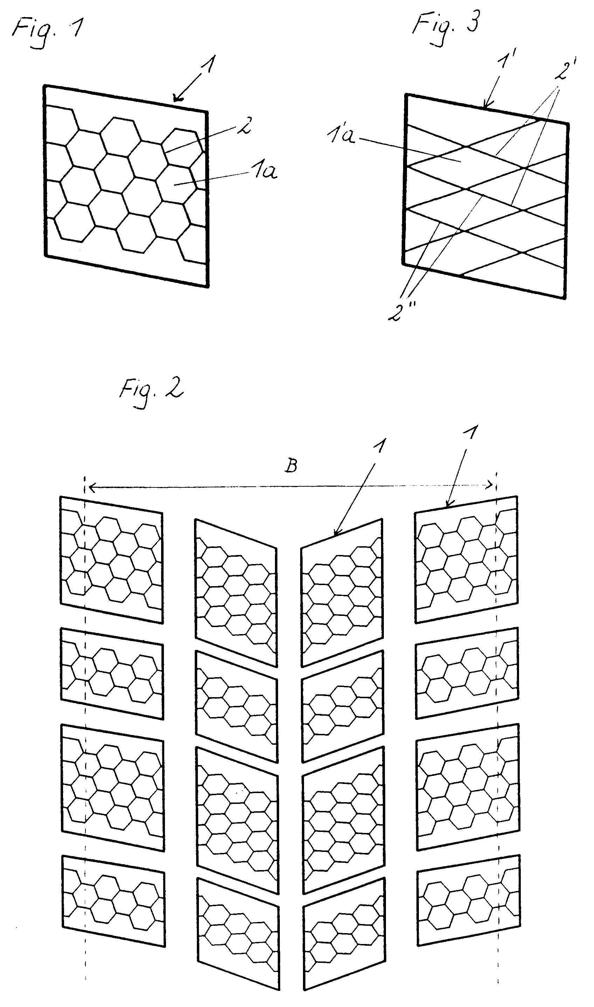

Weitere Merkmale, Vorteile und Einzelheiten der Erfindung werden nun anhand der Zeichnung, die zwei Ausführungsbeispiele darstellt, näher beschrieben. Dabei zeigt Fig. 1 eine Draufsicht auf einen parallelogrammförmigen Profilblock, Fig. 2 eine Draufsicht auf eine Teilabwicklung eines Laufstreifenprofiles, welches nach Fig. 1 gestaltete Profilblöcke enthält und Fig. 3 eine Draufsicht auf eine weitere Ausführungsvariante eines Profilblockes.

Die erste Ausführungsvariante der Erfindung wird nun anhand der Figuren 1 und 2 näher beschrieben. Dabei zeigt Fig. 1 schematisch die Draufsicht auf einen Profilblock 1, welcher eine etwa parallelogrammförmige Grundgestalt besitzt und durch ein Netz von Feineinschnitten 2 strukturiert ist. Es wird darauf verweisen, daß im Rahmen der vorliegenden Erfindung generell unter einem Feineinschnitt ein Einschnitt einer Breite von 0,3 bis 1 mm, insbesondere von 0,3 bis 0,6 mm, zu verstehen ist, wobei die Tiefe eines solchen Feineinschnittes im allgemeinen von etwa 2 mm bis zur generellen Dessintiefe, die üblicherweise 8 mm beträgt, betragen kann. Durch das Netz aus Feineinschnitten 2 wird im Profilblock eine Vielzahl von in Draufsicht die Gestalt von regelmäßigen Sechsecken aufweisenden Blockelementen 1a gebildet, deren Seiten zumindest zum Teil von solchen Feineinschnitten 2 begrenzt sind, die gleichzeitig ein benachbartes Blockelement 1a begrenzen. Im vorliegenden Ausführungsbeispiel sind dabei die regelmäßigen Sechsecke zumindest im wesentlichen gleich groß. Im Bereich der Profilblockkanten können zu den den Profilblock begrenzenden Nuten zu verbindende Feineinschnitte vorgesehen werden. Profilblöcke mit einer derartigen Feineinschnittstrukturierung können daher mit einer sehr hohe Feineinschnittdichte, was für die Griffeigenschaften günstig ist, versehen werden. Dabei ist von Vorteil, wenn, wie in Fig. 1 dargestellt, das Netz aus regelmäßigen Sechsecken zumindest im wesentlichen den gesamten Profilblock überzieht. Dadurch wird dem Profilblock eine sehr gleichmäßige Biegesteifigkeit verliehen.

Fig. 2 zeigt die Draufsicht auf eine Teilabwicklung eines Laufstreifenprofiles, welches sich aus vier in Umfangsrichtung verlaufenden und durch Umfangsnuten voneinander getrennten Blockreihen zusammensetzt, deren Einzelblöcke 1 jeweils ein Feineinschnittnetz, welches aus Sechsecken besteht, beinhaltet. Bei den schulterseitig verlaufenden Blockreihen ist dabei die erfindungsgemäße Ausgestaltung zumindest in jenem Bereich getroffen, wo der Reifen mit dem Untergrund im Normalbetrieb in Kontakt tritt (Laufstreifenbreite B).

Der in Fig. 3 dargestellte Profilblock 1' enthält zwei Scharen von jeweils parallel zueinander verlaufenden geraden Feineinschnitten 2', 2'', die einander kreuzen. Auf diese Art und Weise bilden die Feineinschnitte 2', 2'' ein Netz, welches parallelogrammförmige Blockelemente 1'a einschließt. Wird dabei der Abstand der einzelnen Feineinschnitte 2', 2'' in jeder der beiden Scharen von Feineinschnitten gleich gewählt, entstehen Rhomben. Der Kreuzungswinkel und der Winkel, den die Feineinschnitte 2', 2'' mit der Umfangsrichtung des Reifens einschließen, wird sich danach richten, wie die Biegesteifigkeit eines Blockes 1' bzw. des Gesamtprofiles ausgelegt werden soll. Eine Möglichkeit der Beeinflussung der Biegesteifigkeit besteht bei dieser Ausführungsvariante darin, die beiden Scharen von Feineinschnitten derart anzuordnen, daß innerhalb jeder Schar nicht sämtliche Feineinschnitte parallel zueinander verlaufen. Ebenso kann der Abstand der einzelnen Feineinschnitte zueinander unterschiedlich sein. Auf diese Weise kann beispielsweise ein Netz, welches unregelmäßige Vierecke umfaßt, geschaffen werden.

Die Erfindung ist auf die dargestellten Ausführungsformen nicht eingeschränkt. So ist es beispielsweise möglich, durch die Feineinschnitte ein Netz von Dreiecken oder auch ein Netz von Fünfecken zu bilden. Bei einem Netz, welches sich aus Dreiecken zusammensetzt, ist es beispielsweise möglich, diese aus gleichseitigen oder gleichschenkeligen Dreiecken zusammenzusetzen. Grundsätzlich läßt sich sagen, daß eine Ausgestaltung der Feineinschnitte, bei der regelmäßige oder geometrisch gleichartige n-Ecke, mit n ≥ 3 entstehen, eher auf eine Vergleichmäßigung der Biegesteifigkeit eines Blockes bzw. des Gesamtprofiles wirken, wohingegen mit einer unregelmäßigen Ausgestaltung gezielt ein Einfluß auf unterschiedliche Biegesteifigkeiten, in Umfangsrichtung und/oder in Axialrichtung betrachtet, möglich ist. Aus diesem Grund kann es in einem Profilblock oder einem Laufstreifenband auch günstig, sein, durch die Ausgestaltung des Feineinschnittnetzes unterschiedliche n-Ecke zu kombinieren. Um gezielt Griffkanten zu schaffen, ist es von Vorteil, wenn die entstehenden n-Ecke nicht mehr als sechs Ecken aufweisen. In jedem Fall gestattet es die Erfindung, Profilblöcke, Profilblockreihen oder Laufstreifenbänder so zu gestalten, daß eine sehr hohe Feineinschnittdichte vorliegt, was, wie schon erwähnt, eine große Anzahl von Griffkanten zur Verfügung stellt.

## Patentansprüche

1. Fahrzeugreifen, insbesondere für den Einsatz unter winterlichen Fahrbedingungen, mit einem Laufstreifenprofil, welches Profilelemente, wie Profilblöcke oder in Reifenumfangsrichtung umlaufende Laufstreifenbänder oder dergleichen aufweist, die mit einer Vielzahl von Feineinschnitten versehen sind, die ein Netz aus n-Ecken bilden, dadurch gekennzeichnet, daß das Netz aus Feineinschnitten (2. 2', 2'') entweder aus entlang von Fünf- oder Sechsecken angeordneten Feineinschnitten (2) besteht oder durch zwei Scharen von einander unter von 90° abweichenden Winkeln schneidenden und gerade verlaufenden Feineinschnitten (2', 2'') gebildet wird.

2. Fahrzeugreifen nach Anspruch 1, dadurch gekennzeichnet, daß sich das Netz aus Feineinschnitten (2) aus regelmäßigen bzw. im wesentlichen regelmäßigen Sechsecken zusammensetzt.

3. Fahrzeugreifen nach Anspruch 1, dadurch gekennzeichnet, daß jede Schar von Feineinschnitten (2', 2'') verschieden beabstandete und/oder zumindest zum Teil nicht parallel zueinander verlaufende Feineinschnitte enthält.

## Claims

1. Vehicle tyre, more especially for use in wintry travel conditions, having a tread strip profile, which includes profile elements, such as profile blocks or tread strip bands or the like which circulate in the circumferential direction of the tyre and are provided with a plurality of fine incisions, which form a network of n-gons, characterised in that the network of fine incisions (2, 2', 2'') either comprises fine incisions (2) which are disposed along pentagons or hexagons or is formed by two groups of fine incisions (2', 2''), which intersect each other at angles differing from 90° and extend rectilinearly.

2. Vehicle tyre according to claim 1, characterised in that the network of fine incisions (2) comprises regular or substantially regular hexagons.

3. Vehicle tyre according to claim 1, characterised in that each group of fine incisions (2', 2'') includes fine incisions which are variably spaced from one another and/or extend, at least in part, in a non-parallel manner relative to one another.

## Revendications

1. Pneumatique de véhicule, notamment destiné à être utilisé dans des conditions hivernales de déplacement, comportant une sculpture de la bande de roulement, qui possède des éléments de sculpture tels que des blocs de sculpture ou des bandeaux de la bande de roulement ou analogues, qui s'étendent dans la direction circonférentielle du pneumatique et sont pourvus d'une multiplicité de fines entailles, qui forment un réseau à n sommets, caractérisé en ce que le réseau formé de fines entailles (2, 2' ,2'') est constitué de fines entailles (2) disposées le long de pentagones ou d'hexagones ou est formé de deux ensembles de fines entailles (2' ,2'') et qui se croisent en faisant entre elles des angles qui diffèrent de 90° et s'étendent selon une disposition rectiligne.

2. Pneumatique de véhicule selon la revendication 1, caractérisé en ce que le reseau de fines entailles (2) se compose d'hexagones réguliers ou sensiblement réguliers.

3. Pneumatique de véhicule selon la revendication 1, caractérisé en ce que chaque ensemble de fines entailles (2' ,2'') contient différentes fines entailles distances et/ou au moins en partie non parallèles entre elles.
